# EUROPÄISCHE PATENTSCHRIFT

(11) **EP 1 437 273 B1**
(45) Veröffentlichungstag und Bekanntmachung des Hinweises auf die Patenterteilung: **05.10.2005**
(21) Anmeldenummer: 03017435.3
(22) Anmeldetag: 01.08.2003
(51) Int. Cl.: B60S 1/40

(54) **Verbindungsanordnung einer Wischvorrichtung für Scheiben von Kraftfahrzeugen**
Connector assembly of a wiper device for windshields of vehicles
Ensemble connecteur d'un dispositif d'essuie-glace pour vitres de véhicules automobiles

(30) Priorität: 18.12.2002 DE 10259670
(43) Veröffentlichungstag der Anmeldung: 14.07.2004
(73) Patentinhaber: ROBERT BOSCH GMBH, 70442 Stuttgart (DE)
(72) Erfinder: Op't Roodt, Inigo, 3500 Hasselt (BE)

(56) Entgegenhaltungen:
- WO-A-99/61293
- FR-A- 2 747 980
- FR-A- 2 756 239

## Beschreibung

Die Erfindung betrifft eine Verbindungsanordnung einer Wischvorrichtung für Scheiben von Kraftfahrzeugen mit den im Oberbegriff des Patentanspruch 1 genannten Merkmalen.

### Stand der Technik

Es sind verschiedene Ausführungen von Wischblättern für Scheiben von Kraftfahrzeugen bekannt. Gelenkfreie Wischblätter bestehen typischerweise aus einer Wischleiste, die mittels einer oder zwei Federschienen versteift ist und die eine an der Scheibe anlegbare Wischlippe aufweist. Das Wischblatt ist ungefähr mittig mittels eines Adapters bzw. eines Kupplungsteils lösbar an einem schwenkbaren Wischerarm des Kraftfahrzeugs fixierbar. Bekannte Ausführungsformen des Wischerarm weisen hierbei einen endseitigen Adapterabschnitt mit einem daran befindlichen Stift auf, der in eine Buchse des Kupplungsteils des Wischarms gesteckt werden kann und dessen Schwenkbewegung um die Mittelachse des Stifts ermöglicht.

Bei einer weiteren bekannten Ausführungsform ist an einem freien Ende des Wischerarms ein trapezförmiges Lager vorgesehen, das in eine entsprechend geformte Aussparung des Kupplungselements des Wischblattes eingreifen und dort verriegelt werden kann. Weiterhin sich Einrichtungen zur Begrenzung eines Schwenkwinkels vorgesehen, um das Wischblatt in einer Betriebsstellung zu halten. Bei der Betriebsstellung sind die Längserstreckungsrichtungen des Wischblatts und des Wischerarms annähernd parallel zueinander ausgerichtet.

### Vorteile der Erfindung

Eine erfindungsgemäße Anordnung zur lösbaren Verbindung eines Wischblatts mit einem schwenkbaren Wischerarm einer Wischvorrichtung für Scheiben von Kraftfahrzeugen sieht einen schwenkbar gelagerten Einsatz an einem freien Ende des Wischerarms und eine damit korrespondierende Aufnahme an einem Kupplungselement des Wischblatts sowie eine Einrichtung zur Verriegelung des Einsatzes in der Aufnahme zumindest in einer Betriebstellung des Wischblattes vor, bei der die Längserstreckungsrichtungen des Wischblatts und des Wischerarms annähernd parallel zueinander ausgerichtet sind. Erfindungsgemäß ist vorgesehen, dass die Einrichtung zur Verriegelung eine mit dem Wischerarm verrastbare und den Einsatz in der Aufnahme blockierende Abdeckung aufweist. Hierzu kann die Aufnahme des Kupplungselements eine sich nach außen erweiternde Kontur aufweisen, beispielsweise in V-Form oder in einer halbrunden Form. Der Einsatz weist vorzugsweise einen damit korrespondierenden Querschnitt auf, beispielsweise in Trapez- oder Halbkreisform. Die erfindungsgemäße Anordnung ermöglicht die Montage eines sogenannten gelenklosen Wischblattes an einem universellen Wischerarm durch einfache Verrastung. Ein solcher Wischerarm besteht typischerweise aus einem Bandstahl, der an seinem freien Ende U-förmig gebogen ist und dadurch eine Aufnahme für ein Adapterelement bildet.

Durch eine schwenkbare Lagerung des Einsatzes am freien Ende des Wischerarms ist ein geringer Schwenkwinkel des Wischblattes im Bereich der Betriebsstellung ermöglicht. Die Schwenkachse des Einsatzes ist hierzu senkrecht zu einer jeweiligen Längserstreckungsrichtung des Wischerarms und/oder des Wischblatts ausgerichtet.

Zur Begrenzung des Schwenkwinkels in der Betriebsstellung ist vorzugsweise am Kupplungselement eine mit einer Aussparung am Wischerarm zusammenwirkende Anschlagnase vorgesehen. Durch ein begrenztes Spiel der Anschlagnase in der Aussparung ist eine Begrenzung eines Schwenkwinkels des Wischblatts relativ zum Wischerarm ermöglicht. Eine Ausgestaltung der Erfindung sieht vor, dass die Abdeckung einen in den Wischerarm eingreifenden Rasthaken sowie einen in das Kupplungselement eingreifenden Rastvorsprung aufweist. Der Rastvorsprung ist hierbei vorzugsweise federnd aufgehängt und kann aus seinem Eingriff mit dem Kupplungselement gebracht werden, wodurch die Abdeckung abgenommen werden kann und der Einsatz aus der Aufnahme entnommen werden kann. Vorzugsweise wirkt der Rastvorsprung mit einem Schieber zusammen, bei dessen Betätigung der Rastvorsprung aus seinem Eingriff mit dem Kupplungselement bringbar ist. Auf diese Weise kann mittels eines einfachen Handgriffes die Verriegelung gelöst und das Wischblatt vom Wischerarm getrennt werden.

Weitere vorteilhafte Ausgestaltungen der Erfindung ergeben sich aus den übrigen, in den abhängigen Ansprüchen genannten Merkmalen.

### Zeichnungen

Die Erfindung wird nachfolgend in bevorzugten Ausführungsbeispielen anhand der zugehörigen Zeichnungen näher erläutert. Dabei zeigt:
- Figur 1: eine perspektivische Detailansicht eines Wischerarms,
- Figur 2: eine schematische Perspektivdarstellung eines Kupplungselements zur Befestigung an einem Wischblatt,
- Figuren 3a und 3b: perspektivische Darstellungen einer mit dem Wischerarm verrastbaren Abdeckung,
- Figur 4: eine schematische Perspektivdarstellung des Wischblatts mit dem daran befestigten Kupplungselement,
- Figur 5: eine Explosionsdarstellung zur Verdeutlichung der Montagerichtung des Wischblatts am Wischerarm,
- Figur 6: eine perspektivische Darstellung eines mit dem Wischerarm verbundenen Wischblatts,
- Figuren 7a bis 7c: aufeinander folgende Abläufe der Montage der Abdeckung in perspektivischen Darstellungen und
- Figur 8: eine teilweise freigeschnittene Darstellung des fest mit dem Wischerarm verriegelten Wischblatts.

### Beschreibung der Ausführungsbeispiele

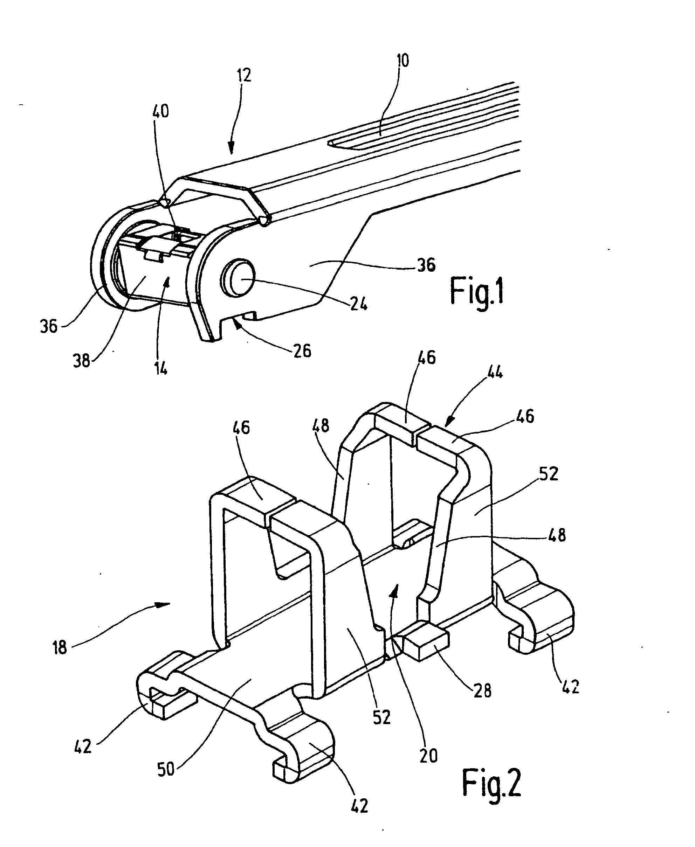

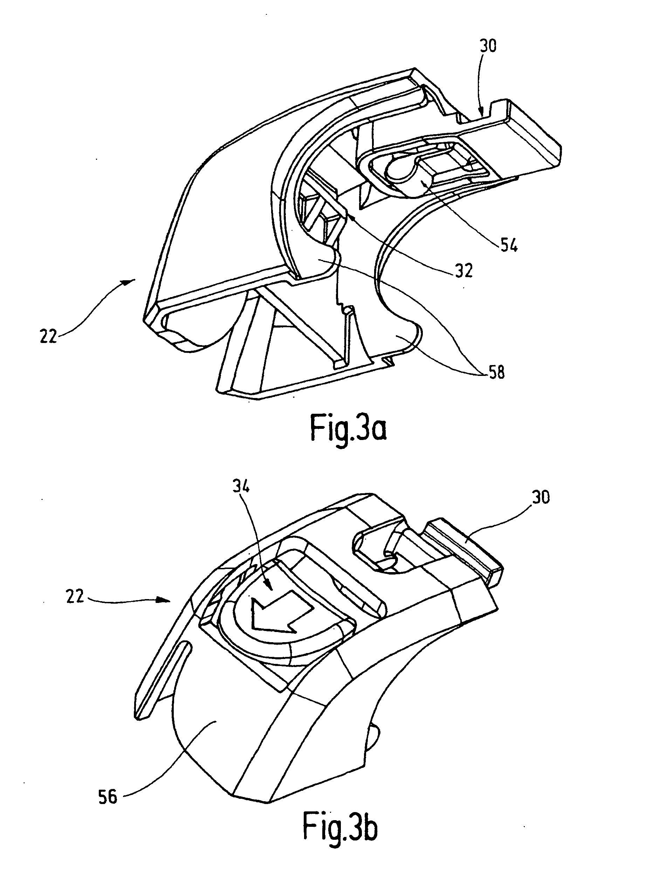

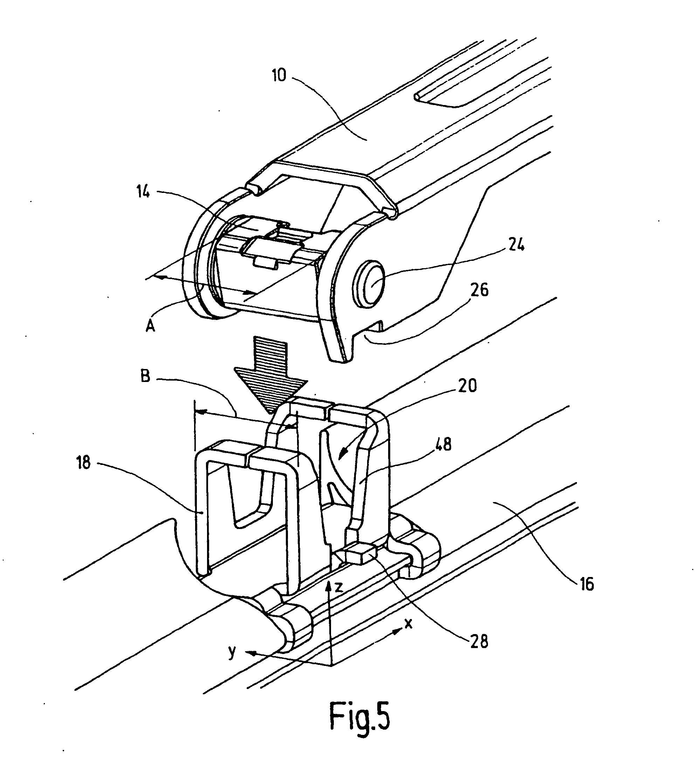

Figur 1 zeigt eine perspektivische Detailansicht eines Wischerarms 10, der an einem freien Ende 12 einen schwenkbaren Einsatz 14 zur lösbaren Verbindung mit einem Wischblatt aufweist, das mit einem Kupplungselement 18 entsprechend Figur 2 versehen ist. Auf das freie Ende 12 des Wischerarms 10 kann eine Abdeckung 22 (Figuren 3a und 3b) aufgesteckt werden, die für eine Verriegelung des in der Aufnahme 20 befindlichen Einsatzes 14 sorgt. Anhand der Figuren 5 bis 8 ist dargestellt, wie die Herstellung der Verbindung und deren Verriegelung sowie deren Lösung erfolgt.

Der Einsatz 14 des Wischerarms 10 weist im gezeigten Ausführungsbeispiel einen trapezförmigen Querschnitt mit seitlichen Passflächen 38, die in entsprechende Aufnahmeflächen 48 einer V-förmigen Aufnahme 20 des Kupplungselements 18 passen. Der Einsatz 14 ist mittels einer in parallelen Seitenflächen 36 des Wischerarms 10 gelagerten Schwenkachse 24 um deren Längsachse verschwenkbar, so dass eine Schwenkbewegung des mit dem Wischerarm 10 verbundenen Wischblattes ermöglicht ist. Zur Begrenzung dieser Schwenkbewegung weist eine der Seitenflächen 36 des Wischerarms 10 an ihrer nach unten weisende Kante eine Aussparung 26 auf, in die eine Anschlagnase 28 des Kupplungselements 18 eingreifen und für ein geringes Spiel sorgen kann.

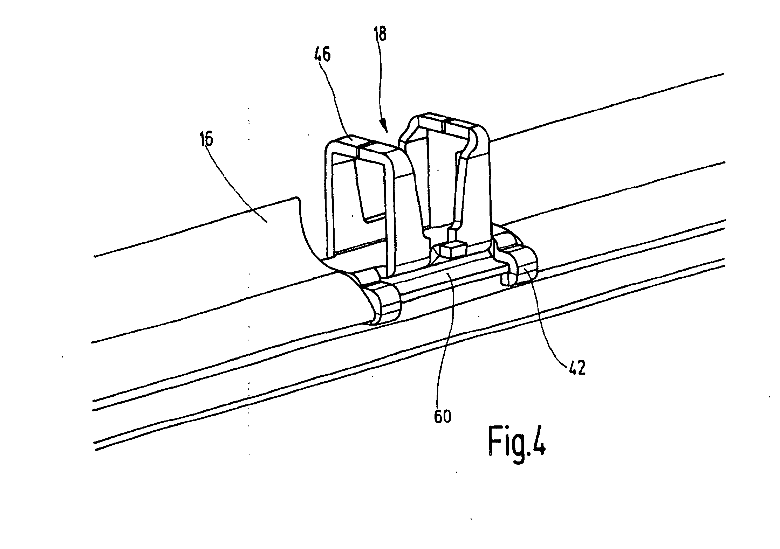

Das Kupplungselement 18 weist eine Grundfläche 50 auf, die auf einer Oberseite des Wischblatts 16 aufsetzbar ist (vgl. Figuren 2 und 4). Die Grundfläche 50 weist an ihren vier Ecken jeweils eine Befestigungslasche 42 auf, die um Federschienen 60 im Wischblatt 16 herumgebogen werden können und auf diese Weise für eine feste Verbindung des Kupplungselements 18 am Wischblatt 16 sorgen. Von der Grundfläche 50 weisen jeweils vier seitliche Schenkel 52 nach oben, deren Spitzen in Gestalt von Biegelaschen 46 zusammengebogen sind und eine Oberseite 44 des Kupplungselements 18 bilden. Die zueinander weisenden Aufnahmeflächen 48 an den inneren Kanten der seitlichen Schenkel 52 bilden die Aufnahme 20, die im gezeigten Ausführungsbeispiel eine mit dem Querschnitt des Einsatzes 14 korrespondierende V-förmige Kontur aufweist.

Der Wischerarm 10 und der darin gelagerte Einsatz 14 können aus Metall oder Kunststoff bestehen, ebenso wie das Kupplungselement 18. Vorzugsweise jedoch besteht dieses aus Stahlblech, so dass die Befestigungslaschen 42 und die Biegelaschen 46 leicht in eine gewünschte Form gebracht werden können und diese stabil beibehalten.

Die Abdeckung 22 (vgl. Figur 3) passt in eine entsprechende Aussparung am freien Ende 12 des Wischerarms 10 und kann mit dem Kupplungselement 18 verrastet werden, wobei gleichzeitig der Einsatz 14 in der Aufnahme 20 fixiert wird.

Figur 5 verdeutlicht die Montagerichtung des Wischerarms 10 am Wischblatt 16. Der Einsatz 14 wird zunächst in die Aufnahme 20 des Kupplungselements 18 geschoben, bis er annähernd spielfrei dort liegt. Die lichte Weite zwischen den beiden Seitenflächen 36 des Wischerarms 10 und damit die Breite A des Einsatzes 14 entspricht annähernd der Breite B der Aufnahme 20, welche dem Abstand der Außenseiten zweier jeweils parallel zueinander stehender, seitlicher Schenkel 52 entspricht. Vorzugsweise ist der Abstand A zwischen den Seitenflächen 36 des Wischerarms etwas größer als der Abstand B, so dass hier keine Klemmung des Wischerarms 10 im Kupplungselement 18 entsteht. Bezug nehmend auf das Koordinatensystem der Figur 4, wird der Einsatz 14 in negative Z-Richtung in die Aufnahme 20 geschoben. Die korrespondierenden Konturen der Aufnahme 20 und des Einsatzes 14 sorgen für eine Verriegelung in x- und in y-Richtung. Die z-Richtung kann anschließend durch die verrastete Abdeckung 22 blockiert werden.

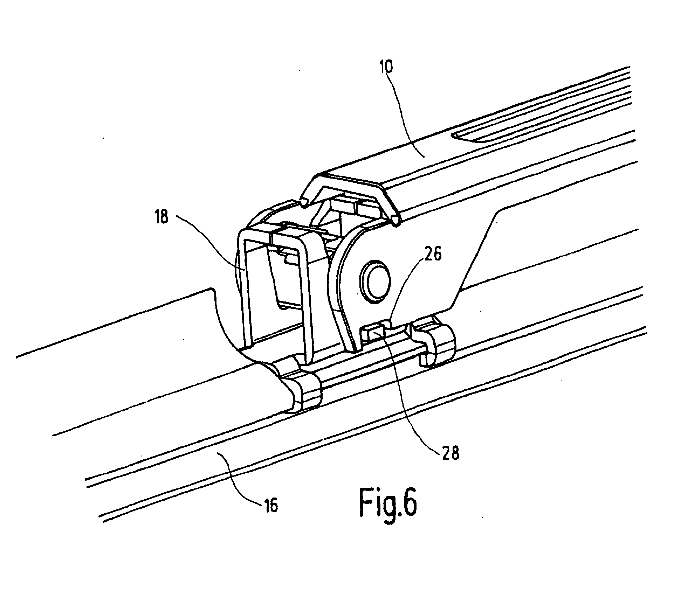

Figur 6 verdeutlicht den eingesetzten Zustand des Einsatzes 14 in der Aufnahme 20 und die miteinander korrespondierenden Anschlagflächen der Anschlagnase 28 in der Aussparung 26 des Wischerarms 10.

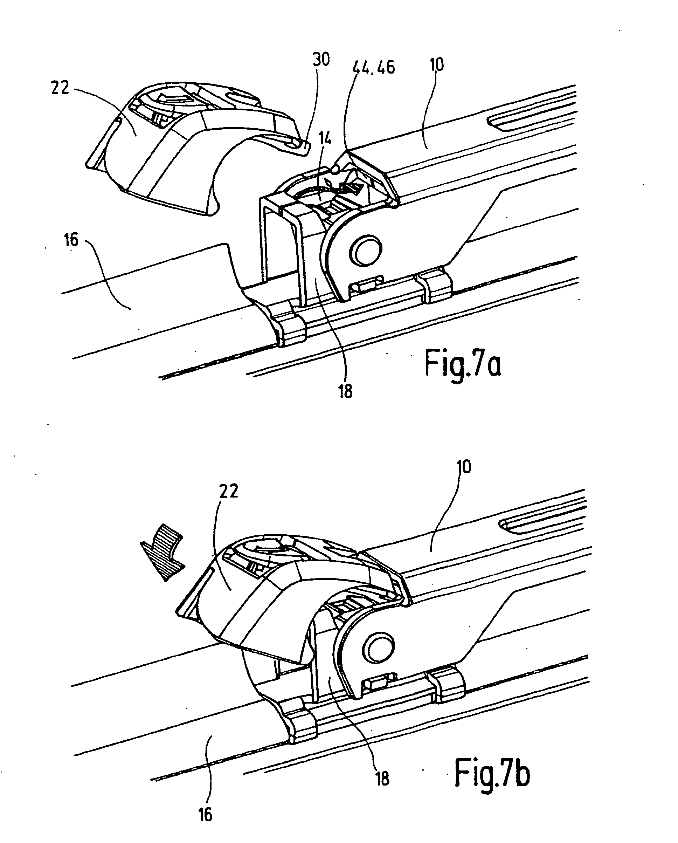

Ein Rasthaken 30 der Abdeckung 22 wird anschließend unter die hintere Oberseite 44 des Kupplungselements 18 geschoben, die im gezeigten Ausführungsbeispiel von einer Oberseite des Wischerarms 10 bedeckt ist (vgl. Figur 7a). Nach dem Einhaken des Rasthakens 30 wird die Abdeckung 22 in Pfeilrichtung (Figur 7b) nach unten geschwenkt, bis ein Rastvorsprung 32 (vgl. Figur 3a) an der anderen Oberseite 44 des Kupplungselements 18 (vgl. Figur 6) einrastet. Gleichzeitig wird hierbei eine Federzunge 54 (Figur 3a) in eine Rastmulde 40 an der Oberseite des Einsatzes 14 (vgl. Figur 1) gedrückt und sorgt für einen spielfreien Sitz des Einsatzes 14 in der Aufnahme 20 des Kupplungselements 18.

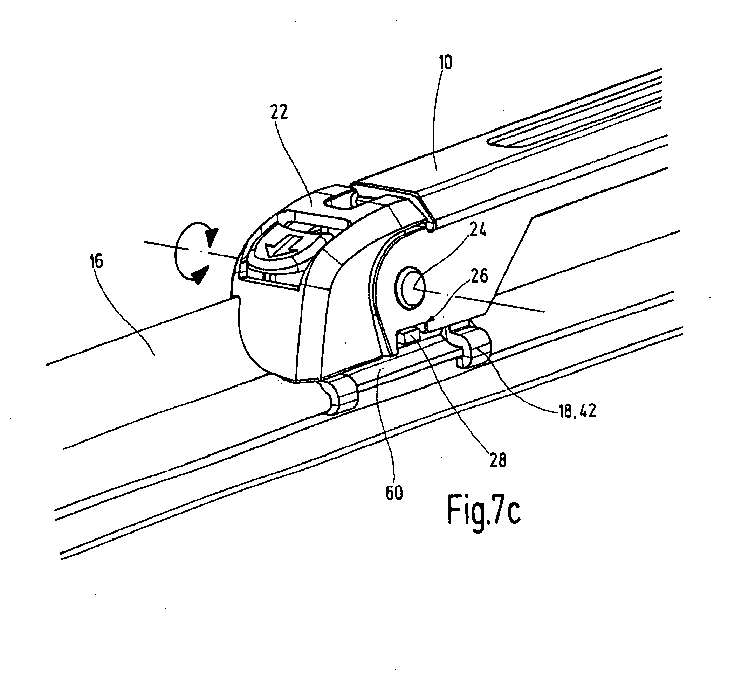

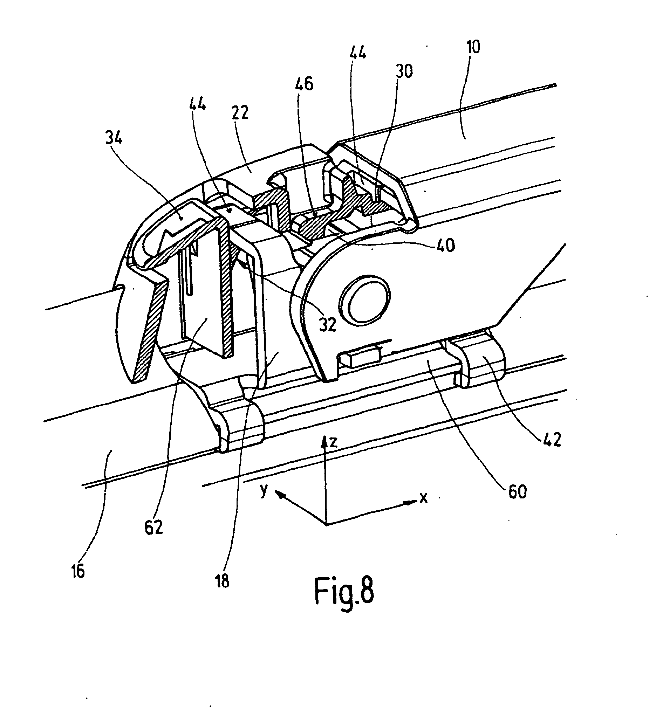

Die Figuren 7c und 8 verdeutlichen den fertig montierten Zustand und die Wirkungsweise eines mit dem Rastvorsprung 32 wirkverbundenen Schiebers 34 an der Oberseite der Abdeckung 22. Wird dieser Schieber 34 betätigt, wird durch die Verformung des am Hebel 62 aufgehängten Rastvorsprungs 32 dieser aus seinem Rastsitz unterhalb der Oberseite 44 des Kupplungselements 18 gezogen, wodurch die Abdeckung 22 entriegelt ist und entsprechend der Darstellung der Figur 7b abgezogen werden kann. Der Rasthaken 30 kann dann wieder aus seiner Position unterhalb der Oberseite 44 des Kupplungselements 18 entnommen und die Abdeckung 22 vollständig abgezogen werden. Anschließend kann wieder der Wischarm 10 vom Wischblatt 16 durch Herausziehen des Einsatzes 14 aus seiner Aufnahme 20 getrennt werden.

Die erfindungsgemäße Verbindungsanordnung eignet sich insbesondere zur Fixierung eines gelenklosen Wischblattes (vgl. Figur 6) an einem bekannten Wischerarm mit einem Einsatz entsprechend den gezeigten Figuren. Ein solches Wischblatt 16 weist üblicherweise seitlich zwei Federschienen 60 auf, die mit dem Wischblatt verbunden und an denen das Kupplungselement 18 fixiert ist. Das erfindungsgemäß ausgestaltete Kupplungselement 18 kann auf einfache Weise mit dem Wischerarm 10 verbunden werden.

## Patentansprüche

1. Anordnung zur lösbaren Verbindung eines Wischblatts an einem schwenkbaren Wischerarm einer Wischvorrichtung für Scheiben von Kraftfahrzeugen, mit einem schwenkbar gelagerten Einsatz an einem freien Ende des Wischerarms und einer damit korrespondierenden Aufnahme an einem Kupplungselement des Wischblatts und mit einer Einrichtung zur Verriegelung des Einsatzes in der Aufnahme zumindest in einer Betriebsstellung des Wischblatts, bei der die Längserstreckungsrichtungen des Wischblatts und des Wischerarms annähernd parallel zueinander ausgerichtet sind, **dadurch gekennzeichnet, dass** die Einrichtung zur Verriegelung eine mit dem Wischerarm (10) verrastbare und den Einsatz (14) in der Aufnahme (20) blockierende Abdeckung (22) aufweist.

2. Anordnung nach Anspruch 1, **dadurch gekennzeichnet, dass** die Aufnahme (20) des Kupplungselements (18) eine sich nach außen erweiternde V-förmige Kontur aufweist.

3. Anordnung nach Anspruch 1 oder 2, **dadurch gekennzeichnet, dass** der Einsatz (14) einen trapezförmigen Querschnitt aufweist.

4. Anordnung nach einem der Anspruche 1 bis 3, **dadurch gekennzeichnet, dass** eine Schwenkachse (24) des Einsatzes (14) senkrecht zu einer jeweiligen Längserstreckungsrichtung des Wischerarms (10) und/oder des Wischblatts (16) ausgerichtet ist.

5. Anordnung nach einem der voranstehenden Ansprüche, **dadurch gekennzeichnet, dass** am Kupplungselement (18) eine, mit einer Aussparung (26) am Wischerarm (10) zusammen wirkende Anschlagnase (28) zur Begrenzung eines Schwenkwinkels des Wischblatts (16) relativ zum Wischerarm (10) vorgesehen ist.

6. Anordnung nach einem der voranstehenden Ansprüche, **dadurch gekennzeichnet, dass** die Abdeckung (22) einen, in den Wischerarm (10) eingreifenden Rasthaken (30) und einen, in das Kupplungselement (18) eingreifenden Rastvorsprung (32) aufweist.

7. Anordnung nach Anspruch 6, **dadurch gekennzeichnet, dass** der Rastvorsprung (32) federnd aufgehängt ist.

8. Anordnung nach Anspruch 6 oder 7, **dadurch gekennzeichnet, dass** der Rastvorsprung (32) zum Abnehmen der Abdeckung (22) und zum Lösen der Verriegelung zwischen Einsatz (14) und Aufnahme (20) aus seinem Eingriff mit dem Kupplungselement (18) bringbar ist.

9. Anordnung nach Anspruch 8, **dadurch gekennzeichnet, dass** der Rastvorsprung (32) mit einem Schieber (34) zusammen wirkt, bei dessen Betätigung er aus seinem Eingriff mit dem Kupplungselement (18) bringbar ist.

## Claims

1. Assembly for the releasable connection of a wiper blade to a pivotable wiper arm of a wiper device for windscreens of vehicles, having a pivotably mounted insert at one free end of the wiper arm and a mount corresponding therewith on a coupling element of the wiper blade, and having a device for locking the insert in the mount at least in an operating position of the wiper blade, in which assembly the directions of longitudinal extent of the wiper blade and wiper arm are oriented approximately parallel to each other, **characterized in that** the locking device has a covering (22) which can be latched to the wiper arm (10) and blocks the insert (14) in the mount (20).

2. Assembly according to Claim 1, **characterized in that** the mount (20) of the coupling element (18) has a V-shaped contour widening outwards.

3. Assembly according to Claim 1 or 2, **characterized in that** the insert (14) has a trapezoidal cross section.

4. Assembly according to one of Claims 1 to 3, **characterized in that** a pivot spindle (24) of the insert (14) is oriented perpendicularly with respect to a particular direction of longitudinal extent of the wiper arm (10) and/or of the wiper blade (16).

5. Assembly according to one of the preceding claims, **characterized in that** a stop lug (28) which interacts with a cutout (26) on the wiper arm (10) is provided on the coupling element (18) to limit a pivot angle of the wiper blade (16) relative to the wiper arm (10).

6. Assembly according to one of the preceding claims, **characterized in that** the covering (22) has a latching hook (30) engaging in the wiper arm (10) and a latching projection (32) engaging in the coupling element (18).

7. Assembly according to Claim 6, **characterized in that** the latching projection (32) is suspended resiliently.

8. Assembly according to Claim 6 or 7, **characterized in that** the latching projection (32) can be brought out of its engagement with the coupling element (18) to remove the covering (22) and to release the lock between the insert (14) and mount (20).

9. Assembly according to Claim 8, **characterized in that** the latching projection (32) interacts with a slide (34) upon the actuation of which it can be brought out of its engagement with the coupling element (18).

## Revendications

1. Dispositif pour relier de manière amovible un balai d'essuie-glace à un bras d'essuie-glace, basculant d'un dispositif d'essuie-glace de véhicules automobiles, comportant un insert monté basculant à l'extrémité libre du bras d'essuie-glace et un logement correspondant d'un élément d'accouplement du balai d'essuie-glace ainsi qu'une installation de verrouillage de l'insert dans le logement, au moins dans une position de fonctionnement du balai d'essuie-glace pour laquelle les directions longitudinales du balai et du bras sont alignées sensiblement parallèlement,
**caractérisé en ce que**
l'installation de verrouillage comporte un capot (22) susceptible d'être accroché au bras d'essuie-glace (10) et bloquant l'insert (14) dans son logement (20).

2. Dispositif selon la revendication 1,
**caractérisé en ce que**
le logement (20) de l'élément d'accouplement (18) a un contour s'élargissant vers l'extérieur suivant une forme de V.

3. Dispositif selon l'une des revendications 1 ou 2,
**caractérisé en ce que**
l'insert (14) a une section trapézoïdale.

4. Dispositif selon l'une des revendications 1 à 3,
**caractérisé en ce qu'**
un axe de basculement (24) de l'insert (14) est aligné perpendiculairement à la direction longitudinale respective du bras d'essuie-glace (10) et/ou du balai d'essuie-glace (16).

5. Dispositif selon l'une des revendications précédentes,
**caractérisé en ce que**
l'élément d'accouplement (18) comporte un bec de butée (28) coopérant avec une découpe (26) du bras d'essuie-glace (10) pour limiter l'angle de basculement du balai (16) par rapport au bras d'essuie-glace (10).

6. Dispositif selon l'une des revendications précédentes,
**caractérisé en ce que**
le capot (22) comporte un crochet (30) pénétrant dans le bras (10) et une saillie d'accrochage (32) pénétrant dans l'élément d'accouplement (18).

7. Dispositif selon la revendication 6,
**caractérisé en ce que**
la saillie d'accrochage (32) est suspendue élastiquement.

8. Dispositif selon les revendications 6 ou 7,
**caractérisé en ce que**
la saillie d'accrochage (32) peut être dégagée de sa prise avec l'élément d'accouplement (18) pour enlever le capot (22) et ouvrir le verrouillage entre l'insert (14) et le logement (20).

9. Dispositif selon la revendication 8,
**caractérisé en ce que**
la saillie d'accrochage (32) coopère avec un coulisseau (34) qui, actionné, peut être dégagé de sa prise avec l'élément d'accouplement (18).
